# EUROPEAN PATENT APPLICATION

(11) **EP 2 650 661 A1**
(43) Date of publication of application: **16.10.2013**
(21) Application number: 12164189.8
(22) Date of filing: 13.04.2012
(51) Int. Cl.: G01J 4/04, G01J 9/00, G02B 21/00, G01N 21/21, G02F 1/01

(54) **Vectorial polarimetry apparatus with phase and polarization spatial control**

(71) Applicant: National University of Ireland, Galway, Galway (IE); Shimadzu Corporation, Kyoto 604-8511 (JP)
(72) Inventor: Saucedo, David Lara, London, Greater London SW2 2BH (GB); Rodriguez Herrera, Oscar Gabriel, Galway (IE); Kenny, Fiona, Galway (IE); Dainty, John Christopher, Co. Galway (IE)
(74) Representative: Catesby, Olivia Joanne

(57) **Abstract**

A vectorial polarimetry apparatus and method with phase-wavefront control for analysing the three-dimensional electromagnetic field resulting from an interaction between a focused illuminating light beam and a sample to be observed the apparatus comprising an illumination source (14) for generating a beam of light; means (40, 42) for controlling the phase of the beam of light at at least two positions across the width of the beam and a focusing system (50) for bringing said illuminating light beam to a focus, wherein the focusing system has a numerical aperture high enough as to produce a tight focus with a suitable three-dimensional vectorial structure at the focus.

## Description

### Field of the Invention

The present invention relates to vectorial polarimetry and additional phase manipulation and/or sensing of a wavefront.

The invention relates to a vectorial polarimetry method with applications in microscopy, metrology, molecular imaging, and optical data storage, among others. Examples of such applications are:
Analysis of structures, defects, or impurities in semiconductors;
Inspection or analysis of chemical specimens, including drugs and polymers;
Observation of carbon (an other materials) nanostructures;
Inspection or analysis of crystal structures; and
Inspection or analysis of stress in condensed matter.

### Background to the Invention

A vectorial polarimeter, such as that disclosed in WO2008135438 (A1) can be used for analysing the three-dimensional electromagnetic field resulting from the interaction of a focused illuminating beam and a sample. WO2008135438 (A1) describes one such system wherein it is possible to characterise the distribution of the state of polarisation of light across a measurement plane. The state of polarisation at different positions across the beam width of the light beam may be controlled and the system affords the detecting and measuring of the state of polarisation of the reflected light at different positions across the width of the measurement plane to retrieve information on the three-dimensional vectorial electromagnetic interaction of the illuminated focused field and the sample.

By controlling the distribution of the state of polarization of the beam - hereafter the "polarization-wavefront" - before focusing occurs, it is possible to finely tailor the three orthogonal components of the electric field inside the focus region to suit the specimen and the type of information required (e.g. the orientation of the electric dipole of a single scattering molecule).

When only the polarization-wavefront is controlled, it may not possible to generate focused fields with pure longitudinal fields on axis. A further disadvantage with this system is that mechanical scanning is required to steer the focused beam. Furthermore, object, instrument, or medium induced phase aberrations can affect the polarization purity and shape of the focused field.

### Summary of the Invention

Defining the distribution of the state of polarization is not the only mechanism to tailor the shape and polarization of the electromagnetic field at the focus. In a high numerical aperture system, the phase distribution - hereafter the "phase-wavefront" - can affect the targeted focus field.

The present invention provides a wavefront manipulation technique, which may be used to correct for spurious phase distortions that impede clear observation of a sample in an imaging device (e.g. in a telescope or a microscope). Strikingly, in a high numerical aperture system, the phase of a wavefront contributes to the design of the distribution of the electromagnetic field at the focus, as well as the polarization-wavefront. In a vectorial polarimeter this is an additional way to manipulate the incident beam before focusing.

As in vectorial polarimetry, different polarisation distributions may be attained by using, for example, discrete polarisation elements like a pixelated spatial light modulator, continuous polarisation devices like space-variant waveplates, or by simple phase and amplitude masks. However, the absolute phase (as opposed to the relative phase between field components) may also be used to tailor the field at the focus.

In practice this may be achieved by manipulating the phase before tailoring the polarization of the beam to be focused. One example of such an implementation may be a sequence of three passes through one or more Spatial Light Modulators, where the first pass is used to modulate the phase-wavefront, and the last two, just as in vectorial polarimetry, to tailor the polarization of the beam. Other phase modulation devices may also be used, such as deformable mirrors (continuous or segmented), or fixed or dynamic phase plates, among others.

It is possible to engineer a three-dimensional electromagnetic field by means of focusing a beam of light with a chosen polarization-wavefront, and through use of the present invention, also design the absolute phase-wavefront, by using an optical system with a sufficiently high N.A.. If such an illuminating focused beam impinges on a sample to be observed (i.e. optically analysed) the electromagnetic field that results from the interaction of the illumination light and the sample will be, in general, a three-dimensional vector field. Modulating the absolute phase adds a new dimension in the exploration of the response of the sample. A critical effect of such manipulation arises when vortices in the phase-wavefront are present in the beam to be focused. Vortices can be generated by manipulating the absolute phase, but they cannot be constructed by the linear superposition of polarisation distributions. They add a new dimension to the study of the sub-resolution sample.

Accordingly, the present invention provides an improved vectorial polarimetry apparatus and method for analysing the three-dimensional electromagnetic field resulting from an interaction between a focused illuminating beam and a sample to be observed, by incorporating manipulation of the absolute phase distribution across the beam to be focused. This manipulation can also correct aberrations in the imaging system with or without the assistance of a wavefront sensor, but crucially, it can generate new wavefront distributions that have a novel impact in the focused field; for example as vortices.

Furthermore, a wavefront sensor device may be used not only to assist the adaptive optics correction device, but to additionally or to also extract critical information of the specimen analysed. For example, if the sub resolution specimen introduces chiral effects to the probing beam, these may manifest as vortices in the phase-wavefront. A conventional vectorial polarimeter does not have the capability of measuring these effects, which could arise from sub-resolution chiral geometry or structure in the specimen.

Adaptive optics for vectorial polarimetry is also contained within the invention. Phase/wavefront control increases the amount of information that can be used with a vectorial polarimeter in, both, illumination and detection.

Accordingly the present invention provides a vectorial polarimetry apparatus with phase-wavefront control for analysing the three-dimensional electromagnetic field resulting from an interaction between a focused illuminating light beam and a sample to be observed the apparatus comprising:
an illumination source for generating a beam of light;
means for controlling the phase of the beam of light at at least two positions across the width of the beam;
a focusing system for bringing said illuminating light beam to a focus, wherein the focusing system has a numerical aperture high enough as to produce a tight focus with a suitable three-dimensional vectorial structure at the focus.

The means for controlling may comprise at least one phase-wavefront manipulation device.

The apparatus may further comprise means to control the state of polarisation at different positions across the beam width of the light beam wherein the means for controlling the phase is adapted to manipulate the absolute phase independently of the state of polarisation.

The apparatus may further comprise means for measuring the phase-wavefront of light reflected from the sample at different positions across the width of a measuring plane.

The means for measuring may comprise at least one wavefront estimation device that can measure the phase-wavefront of the light from the sample at different positions across the width of the measuring plane.

The at least one wavefront estimation device may comprise a wavefront sensor. The means for measuring aids in the estimation of the three-dimensional focused field and/or the control of the phase-wavefront manipulation device.

The means for measuring further allows assessment of, for example, chiral properties of the specimen under observation.

The apparatus may further comprise a sample stage manipulated mechanically to enlarge lateral working distance. The sample stage is adapted to move a sample around the focal region. Thus it may be possible to use the apparatus on more a single position of the specimen, i.e. through scanning. Scanning mirrors may alternatively be used.

The apparatus may further comprise a spatial polarisation state generator comprising means to control the state of polarisation at different positions across the beam width of the light beam.

The apparatus may further comprise at least one spatial polarisation state analyser comprising a polarisation sensitive detector adapted to measure the state of polarisation of the light from the sample at different positions across the width of the measuring plane to retrieve information on the three dimensional vectorial electromagnetic interaction of the illuminated focused field and the sample.

The apparatus may further comprise a light splitter through which reflected light from the sample pass for separating light to the wavefront sensor and the spatial polarisation state analyser.

The light splitter may further comprise at least one beam splitter. The beam-splitter is preferably a non-polarising beam splitter.

The light splitter may comprise at least one mirror that covers only a part of a cross section of the illuminating beam so as to reflect only a portion of the light towards the sample. The mirror may reflect some of the light towards the sample and let some of the light go through towards the detection arm, although alternative designs are envisaged and may be employed.

The spatial polarisation state controller may be adapted to control the state of polarisation of both the illuminating and detected light.

The means for controlling the phase of the beam may be a spatial phase modulator.

The spatial phase modulator may be a liquid crystal spatial light modulator or another adaptive optics device.

The wavefront sensor may comprise means for measuring the phase wavefront of the beam of light at different positions on the measuring plane.

The wavefront sensor may comprise an image conjugate or pupil conjugate wavefront sensor. The image conjugate or pupil conjugate wavefront sensor may be for example a Shack-Hartmann or a Pyramid wavefront sensor, respectively.

The apparatus may further comprise a control and processing unit. The control and processing unit may comprise:
means for controlling the spatial polarisation state generator;
means for synchronising the measurements of the spatial polarisation state analyser;
means for processing the acquired data to estimate the three-dimensional vectorial field and/or characteristics of the observed sample;
means for controlling the phase-wavefront manipulation device; and
means for synchronising the measurements of the wavefront sensor.

The control and processing unit may be adapted to synchronise and process the operation and the data measured by the apparatus.

The apparatus may further comprise at least one spatial polarisation state analyser comprising a polarisation sensitive detector adapted to measure the state of polarisation of the reflected light at different positions across the width of the measurement plane; and

at least one confocal polarisation state analyser comprising a polarisation sensitive detector adapted to measure the state of polarisation at different positions across the width of the measuring plane to retrieve information on the three dimensional vectorial electromagnetic interaction of the illuminated focused field and the sample.

The illumination source may comprise at least one laser.

The illumination source may further comprise a spatial filter in combination with a collimator lens to expand the output of the laser to produce a resulting collimated beam.

The illumination source may comprise at least one broadband source or multiple sources.

The means to control the state of polarisation at different positions across the beam width of the light beam may be a spatial polarisation state control.

The spatial polarisation state control may comprise a pixelated or continuous spatial light modulator (SLM).

The spatial polarisation state control may comprise a liquid crystal SLM followed by any polarisation optics like polarisers, prisms and waveplates.

The means to control the state of polarisation at different positions across the beam width of the light beam may comprise discrete polarisation elements. Such discrete polarisation elements may be selected from the group comprising a pixelated spatial light modulator, continuous polarisation devices, or phase and amplitude masks.

The polarisation state generator may be adapted to act selectively across the beam's width.

The focusing system may comprise a combination of refracting and/or reflecting surfaces.

The focusing system may be arranged so as to further collect the reflected light from the sample.

The apparatus may further comprise an optical system for selecting the optical measuring plane. The measuring plane may be conjugate to the entrance pupil of the focusing system.

The optical system may comprise means for optically conjugating the exit plane of the spatial polarisation state control and the entrance pupil of the focusing system. The optical system is preferably a 4f system.

The optical system may comprise means for producing an image of the same entrance pupil of the focusing system onto the detector measuring plane. Preferably the measurement plane is an exit pupil of the optical system.
a) According to one aspect of the present invention there is provided a vectorial polarimeter comprising:
   a spatial polarisation state generator comprising an illumination source for generating a beam of light and means to control the state of polarisation at different positions across the beam width of the light beam;
   a focusing system for bringing said illuminating light beam to a focus, wherein the focusing system has a numerical aperture high enough as to produce a tight focus with a suitable three-dimensional vectorial structure at the focus;
      i. at least one spatial polarisation state analyser comprising a polarisation sensitive detector that can measure the state of polarisation of the light from the sample at different positions across the width of the measuring plane to retrieve information on the three dimensional vectorial electromagnetic interaction of the illuminated focused field and the sample;
   at least one phase-wavefront manipulation device for controlling the phase at different positions across the beam width of the light beam, with the ability to manipulate the absolute phase independently of the state of polarisation;
b) at least one wavefront estimation device, for example a wavefront sensor, that can measure the phase-wavefront of the light from the sample at different positions across the width of the measuring plane, to aid in the estimation of the three-dimensional focused field and/or the control of the phase-wavefront manipulation device. The at least one wavefront estimation device can preferably measure the phase-wavefront of the light from the sample at different positions across the width of the measuring plane, to assess chiral properties, or others, of the specimen under observation.

The present invention further provides a method for analysing the three-dimensional electromagnetic field resulting from an interaction between a focused illuminating light beam and a sample to be observed the method comprising: generating a beam of light; controlling the phase of the beam of light at at least two positions across the width of the beam; focussing said illuminating light beam to a focus, using a numerical aperture high enough as to produce a tight focus with a suitable three-dimensional vectorial structure at the focus.

The method may further comprise controlling the state of polarisation at different positions across the beam width of the light beam and manipulating the absolute phase independently of the state of polarisation.

The method may further comprise measuring the phase-wavefront of light reflected from the sample at different positions across the width of a measuring plane.

The method may further comprise measuring the state of polarisation of the light from the sample at different positions across the width of the measuring plane to retrieve information on the three dimensional vectorial electromagnetic interaction of the illuminated focused field and the sample.

The method may further comprise controlling the state of polarisation of both the illuminating and detected light.

The method may further comprise measuring the phase wavefront of the beam of light at different positions on the measuring plane.

The method may further comprise synchronising the measurements of the state of polarisation; synchronising the measurements of the phase-wavefront; and processing the acquired data to estimate the three-dimensional vectorial field and/or characteristics of the observed sample.

The method may further comprise measuring the state of polarisation of the reflected light at different positions across the width of the measurement plane; and measuring the state of polarisation at different positions across the width of the measuring plane to retrieve information on the three dimensional vectorial electromagnetic interaction of the illuminated focused field and the sample.

The invention further provides a computer program comprising computer program code means adapted to perform all the steps of the above method when said program is run on a computer.

### Brief Description of the Drawings

The present invention will be more clearly understood from the following description with reference to the accompanying drawings, in which:
Figure 1 shows a vectorial polarimeter apparatus with phase-wavefront control in accordance with one embodiment of the present invention.
Figure 2 shows a vectorial polarimeter apparatus with phase-wavefront control in accordance with a further embodiment of the present invention.
Figure 3 shows a vectorial polarimeter apparatus with phase-wavefront control in accordance with further embodiment of the present invention.
Figure 4 is a detailed representation of one embodiment of a vectorial polarimetry apparatus with incorporated phase control according to the present invention.

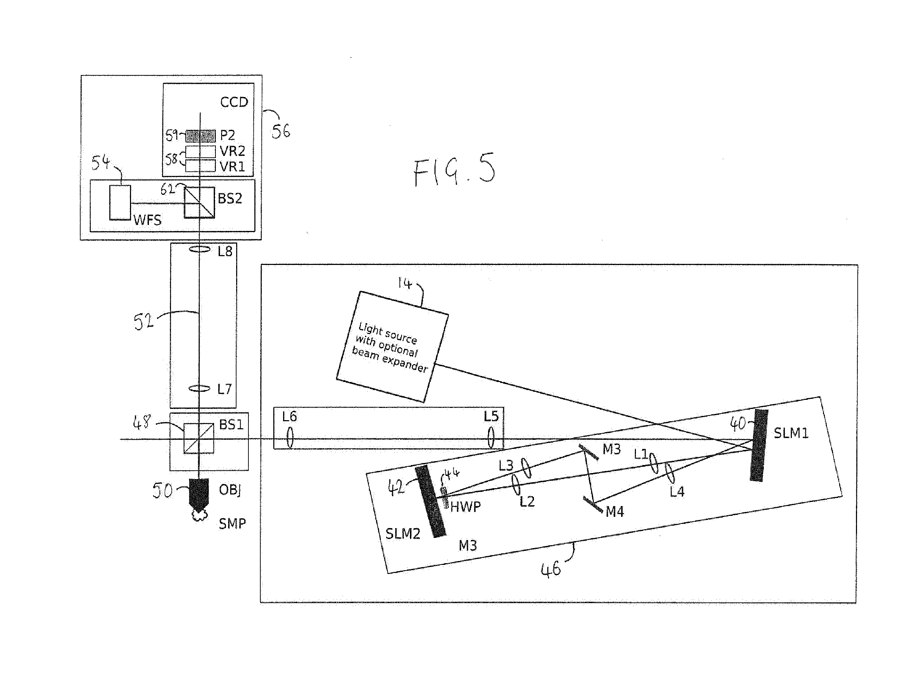

Figure 5 is a detailed representation of a further embodiment of a vectorial polarimetry apparatus with incorporated phase control according to the present invention.

### Detailed Description of the Drawings

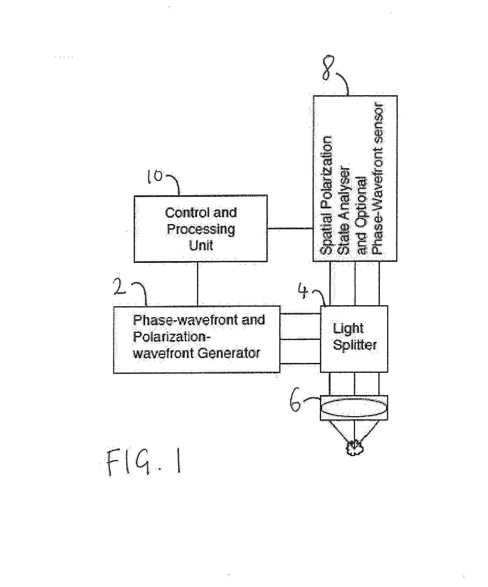

Figure 1 shows a vectorial polarimetry apparatus with additional phase-wavefront control according to one embodiment of the present invention. The apparatus has a reflection configuration. Its basic components are a phase-wavefront and polarisation-wavefront generator 2, a light splitter 4, a focusing system 6, a spatial polarisation state analyser with wavefront sensor 8 and a control and processing unit 10.

The phase-wavefront and polarisation-wavefront generator 2 comprises a light (illumination) source and a means to control the state of polarisation at different positions across the beam width and a means to control the phase wavefront at different positions across the beam width. This can be achieved by, for example, discrete polarisation or phase elements like a pixelated spatial light modulator, continuous polarisation or phase devices like a space-variant waveplate, or by simple phase and amplitude masks.

The light splitter is any device that can separate the illumination arm from the detection arm. This can be easily done by light beam splitters, for example a cube, a pellicle, or a plate. Another alternative is to use mirrors that cover only a part of the cross section of the illumination as to reflect some of the light towards the sample and let some of the light go through towards the detection arm. The use of any other light splitter is also envisaged.

The focusing system Σ in this configuration is responsible for bringing light to a focus, and also acts as the collector of the light that returns from the sample. As mentioned earlier, this system can be a combination of refracting and/or reflecting surfaces, a diffraction grating or any other suitable optical system. The only requirement is that the numerical aperture is high enough as to produce a tight focus with a suitable three-dimensional vectorial structure at the focus.

The spatial polarisation state analyser and wavefront sensor comprises a polarisation sensitive detector that can measure the state of polarisation at different positions across the width of the measuring plane and a wavefront sensor that can measure the absolute phase at different positions across the width of the measuring plane. The wavefront sensor may be incorporated into the spatial polarisation state analyser or it may be an additional element to measure the phase-wavefront, for example a light splitter and Shack-Hartmann wavefront sensor or pyramid wavefront sensor or interferometer, among others.

The control and processing unit 10 comprises a means to control the phase-wavefront and polarisation-wavefront generator, synchronise the measurements of the spatial polarisation state analyser and the wavefront sensor, and process the acquired data to estimate the three-dimensional vectorial field and/or characteristics of the observed sample.

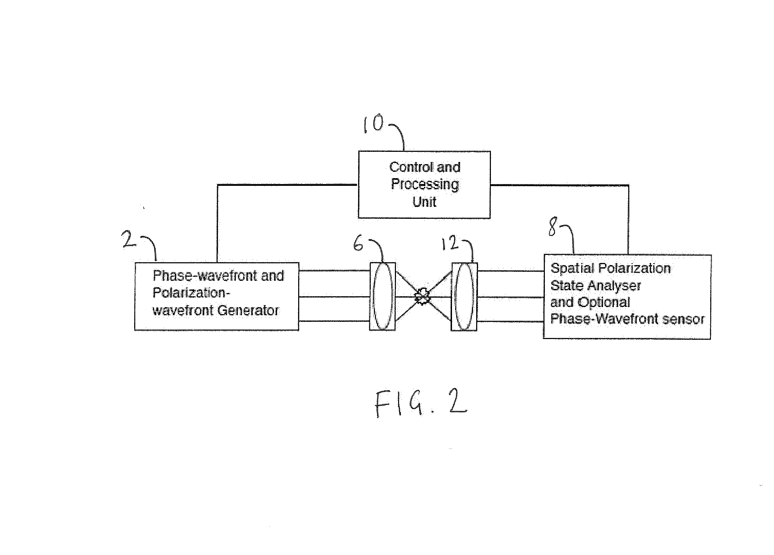

Figure 2 shows a further embodiment of vectorial polarimetry apparatus with incorporated phase-wavefront control in the transmission configuration according to the present invention. Its basic components are similar to the apparatus in the reflection configuration, but the light splitter is not strictly necessary and a separate high numerical aperture optical collector Σ' 12 is necessary to capture the light that has been scattered by the sample. The description for the rest of the components is the same as in the reflection configuration example shown in Figure 1.

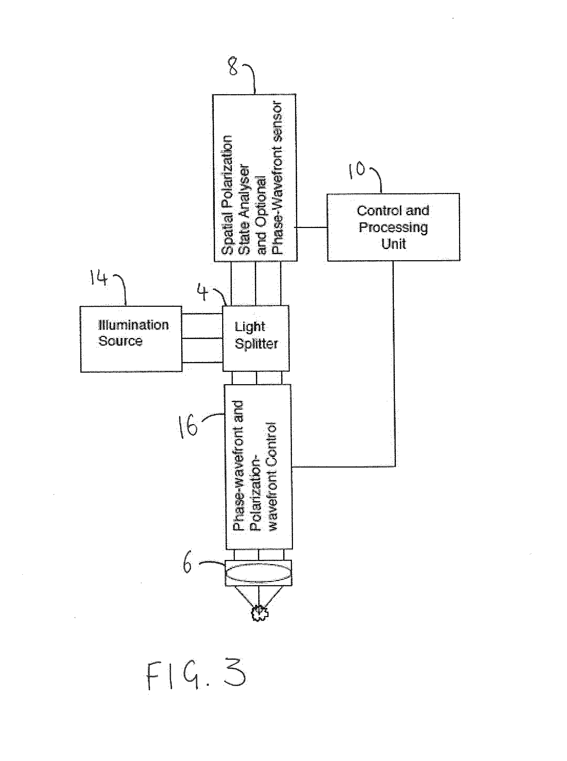

Figure 3 shows a vectorial polarimetry apparatus with incorporated phase-wavefront control in the reflection configuration, in accordance with a further embodiment of the invention, that uses the phase-wavefront and polarisation-wavefront state control on the illumination and the detection arms. This is sometimes known as closed-loop operation. The apparatus comprises an illumination source 14 and separate phase-wavefront and polarisation-wavefront control 16. The apparatus further comprises a spatial polarisation state analyser and phase-wavefront sensor 8. If the polarisation features across the measuring plane for a given sample are well identified, the embodiment of figure 3 could be used to pick such features without necessarily measuring all the polarisation properties of the sample.

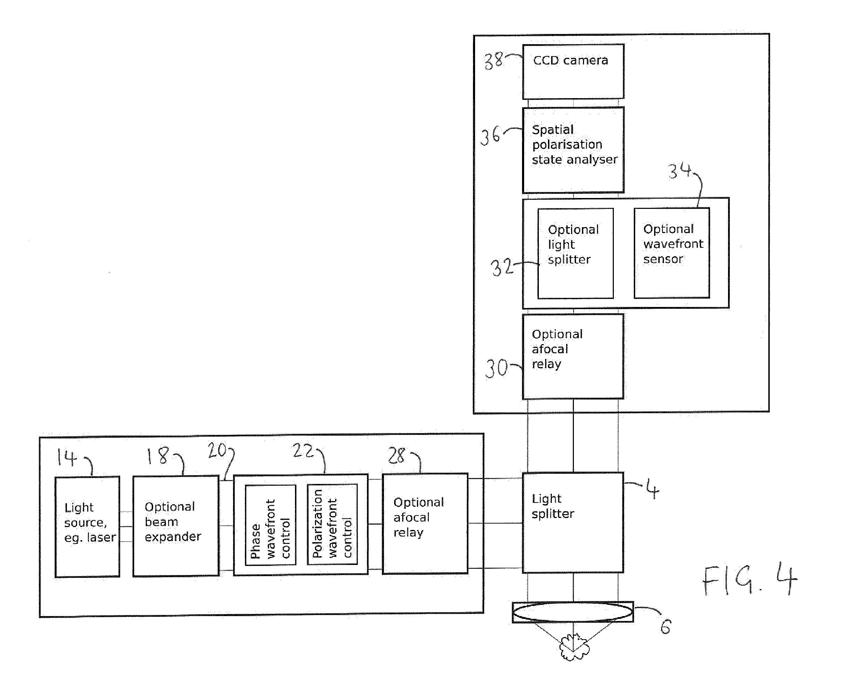

Figure 4 is a detailed representation of one embodiment of a vectorial polarimetry apparatus with incorporated phase control according to the present invention. In the system in Figure 2, the illumination light source 14 can be a laser, which is then expanded by means of, for example, a beam expander 18. The resulting beam 20, which can be collimated, passes through a phase-wavefront and polarisation-wavefront control device 22. This device can have a phase-wavefront control device 24 before a polarisation-wavefront control 26. The phase wavefront-control device can be pixelated or continuous spatial light modulator (SLM), a deformable mirror (continuous or segmented) or other electro-optic modulators. The polarisation-wavefront control device can be a pixelated or continuous spatial light modulator (SLM); an example of it is a liquid crystal SLM followed by any polarisation optics like polarisers, prisms and waveplates. The aim, as mentioned before, is to produce a beam with controlled state of polarisation and controlled phase-wavefront at different positions across its width. This is achieved by the combination just described or any other phase-wavefront polarisation-wavefront generators. An optional optical system 28, for example an afocal 4f relay system, between the polarization-wavefront control and the beam-splitter can be used to select the optical plane that is conjugate to the entrance pupil of the focusing system Σ 6.For example, one possible choice is to optically conjugate the exit plane of the phase-wavefront and polarisation-wavefront control and the entrance pupil of the focusing system Σ. The focusing system can be described as per the previous examples. Once the light returns from the sample and passes through the focusing system Σ it will pass through the beam-splitter 4. Both passes through the beam-splitter and through any optics involved, should be properly calibrated; this is possible by any readily available or newly developed method.

After the beam-splitter, another optional optical afocal relay system 30 can produce an image of the same entrance pupil of the focusing system Σ onto the detector measuring plane Γ. The state of polarisation at different positions on the pupil will be measured by the spatial polarisation state analyser (PSA) after passing through a light splitter 32 that directs some of the light to a wavefront sensor 34. The spatial PSA can be formed by a polarisation state analyser 36 and an intensity detector 38 with spatial resolution across the width of the measuring plane Γ. The wavefront sensor can be any existing or newly developed wavefront sensor, for example a Shack-Hartmann or a pyramid wavefront sensor, a point diffraction interferometer, or any other type of interferometer.

Again, a control unit synchronises and processes the operation and the data measured by the apparatus.

Figure 35 shows a further embodiment of a vectorial polarimetry apparatus with incorporated phase-wavefront and polarisation-wavefront control in accordance with the present invention.

Light is generated by the light source 14 with beam expander, for example a laser, after which its spatial polarisation state and absolute phase may be changed by the phase-wavefront and polarisation-wavefront controller. The phase-wavefront and polarisation-wavefront controller may comprise, for example, two spatial light modulators, SLM1 40 and SLM2 42. The first pass on the SLMs may be used to control the absolute phase, and therefore may act as the phase-wavefront controller. The second and third passes on the SLMs may act as the polarisation-wavefront controller. Preferably the relative angle of the fast axes of SLM1 and SLM2 may be 45°. This may be accomplished, for example, by rotation of one of the spatial light modulators by 45° or by placing a half waveplate, HWP 44, with its fast axis at 22.5° between the two spatial light modulators. Imaging may be used between passes on the SLMs 40, 42 using, for example, two 4f systems which may comprise lenses, L1, L2, L3 and L4.

Light from the phase-wavefront and polarisation-wavefront controller 46 passes a light splitter, which, for example, may be a beam splitter (BS1) 48 before reaching OBJ, which is the focusing system Σ 50. The light that returns from the sample is collected again by OBJ 50 and then separated by BS1 48.

One branch 52 goes towards a spatial polarisation state analyser with phase-wavefront sensor 54. An afocal relay may be used between the focusing system and spatial polarisation state analyser 56 with phase-wavefront sensor. The spatial polarisation state analyser measures the state of polarisation at different positions across the measuring surface and comprises two variable retarders 58, a polariser 59 and a camera 60. The phase-wavefront sensor may comprise a beam splitter 62 and a Shack Hartmann wavefront sensor or pyramid wavefront sensor, for example.

The embodiments in the invention described with reference to the drawings comprise a computer apparatus and/or processes performed in a computer apparatus. However, the invention also extends to computer programs, particularly computer programs stored on or in a carrier adapted to bring the invention into practice. The program may be in the form of source code, object code, or a code intermediate source and object code, such as in partially compiled form or in any other form suitable for use in the implementation of the method according to the invention. The carrier may comprise a storage medium such as ROM, e.g. CD ROM, or magnetic recording medium, e.g. a floppy disk or hard disk. The carrier may be an electrical or optical signal which may be transmitted via an electrical or an optical cable or by radio or other means.

The words "comprises/comprising" and the words "having/including" when used herein with reference to the present invention are used to specify the presence of stated features, integers, steps or components but does not preclude the presence or addition of one or more other features, integers, steps, components or groups thereof.

It is appreciated that certain features of the invention, which are, for clarity, described in the context of separate embodiments, may also be provided in combination in a single embodiment. Conversely, various features of the invention which are, for brevity, described in the context of a single embodiment, may also be provided separately or in any suitable sub-combination.

## Claims

1. A vectorial polarimetry apparatus with phase-wavefront control for analysing the three-dimensional electromagnetic field resulting from an interaction between a focused illuminating light beam and a sample to be observed the apparatus comprising:
an illumination source for generating a beam of light;
means for controlling the phase of the beam of light at at least two positions across the width of the beam; and
a focusing system for bringing said illuminating light beam to a focus, wherein the focusing system has a numerical aperture high enough as to produce a tight focus with a suitable three-dimensional vectorial structure at the focus.

2. The apparatus of claim 1 wherein the means for controlling comprises at least one phase-wavefront manipulation device.

3. The apparatus of any preceding claim further comprising means to control the state of polarisation at different positions across the beam width of the light beam wherein the means for controlling the phase is adapted to manipulate the absolute phase independently of the state of polarisation.

4. The apparatus of any preceding claim further comprising means for measuring the phase-wavefront of light reflected from the sample at different positions across the width of a measuring plane.

5. The apparatus of claim 4 wherein the means for measuring comprises at least one wavefront estimation device that can measure the phase-wavefront of the light from the sample at different positions across the width of the measuring plane.

6. The apparatus of any of claims 1 to 2 and 4 to 5 further comprising:
a spatial polarisation state generator comprising means to control the state of polarisation at different positions across the beam width of the light beam.

7. The apparatus of any preceding claim further comprising a control and processing unit comprising:
means for controlling the spatial polarisation state generator;
means for synchronising the measurements of the spatial polarisation state analyser;
means for processing the acquired data to estimate the three-dimensional vectorial field and/or characteristics of the observed sample;
means for controlling the phase-wavefront manipulation device; and
means for synchronising the measurements of the wavefront sensor.

8. The apparatus of any preceding claim further comprising:
at least one spatial polarisation state analyser comprising a polarisation sensitive detector adapted to measure the state of polarisation of the reflected light at different positions across the width of the measurement plane; and
at least one confocal polarisation state analyser comprising a polarisation sensitive detector adapted to measure the state of polarisation at different positions across the width of the measuring plane to retrieve information on the three dimensional vectorial electromagnetic interaction of the illuminated focused field and the sample.

9. A method for analysing the three-dimensional electromagnetic field resulting from an interaction between a focused illuminating light beam and a sample to be observed the method comprising:
generating a beam of light;
controlling the phase of the beam of light at at least two positions across the width of the beam;
focussing said illuminating light beam to a focus, using a numerical aperture high enough as to produce a tight focus with a suitable three-dimensional vectorial structure at the focus.

10. The method of claim 9 further comprising controlling the state of polarisation at different positions across the beam width of the light beam and manipulating the absolute phase independently of the state of polarisation.

11. The method of claim 9 or claim 10 further comprising measuring the phase-wavefront of light reflected from the sample at different positions across the width of a measuring plane.

12. The method of any of claims 9 to 11 further comprising measuring the state of polarisation of the light from the sample at different positions across the width of the measuring plane to retrieve information on the three dimensional vectorial electromagnetic interaction of the illuminated focused field and the sample.

13. The method of claim 12 further comprising:
synchronising the measurements of the state of polarisation;
synchronising the measurements of the phase-wavefront; and
processing the acquired data to estimate the three-dimensional vectorial field and/or characteristics of the observed sample.

14. The method of any of claims 9 to 13 further comprising:
measuring the state of polarisation of the reflected light at different positions across the width of the measurement plane; and
measuring the state of polarisation at different positions across the width of the measuring plane to retrieve information on the three dimensional vectorial electromagnetic interaction of the illuminated focused field and the sample.

15. A computer program comprising computer program code means adapted to perform all the steps of the method of any of claims 9 to 14 when said program is run on a computer.
